# EUROPEAN PATENT APPLICATION

(11) **EP 4 447 173 A1**
(43) Date of publication of application: **16.10.2024**
(21) Application number: 23197559.0
(22) Date of filing: 14.09.2023
(51) Int. Cl.: H01M 10/04, H01M 10/44, H01M 50/20

(54) **BATTERY CONSTRAINED DEVICE, BATTERY UNCONSTRAINED DEVICE, AND BATTERY CONSTRAINED AND UNCONSTRAINED DEVICE**

(30) Priority: 13.04.2023 CN 202310398357
(71) Applicant: Guangdong HYNN Technologies Co., Ltd., Dongguan, Guangdong 518000 (CN)
(72) Inventor: Zhou, Haiyang, Dongguan (CN); Wang, Hong, Dongguan (CN); Qiu, Long, Dongguan (CN); Wei, Shicheng, Dongguan (CN); Huang, Yerong, Dongguan (CN); Wang, Shoumo, Dongguan (CN)
(74) Representative: Meyer, Thorsten

(57) **Abstract**

A battery constrained device includes a first base for a constrained tray; a pushing mechanism assembled on the first base and a first screw rotation mechanism mated with the pushing mechanism. The pushing mechanism selectively pushes a constrained plate in the constrained tray to clamp the batteries in the constrained tray. The first screw rotation mechanism is selectively connected with a screw in the constrained tray to drive the screw to rotate, so that the first screw rotation mechanism applies constraints on the batteries in the constrained tray under a cooperation of the pushing mechanism.

## Description

### FIELD OF THE INVENTION

The present application relates to the technical field of battery manufacturing, in particular to a battery constrained device, battery unconstrained device and a battery constrained and unconstrained device.

### BACKGROUND OF THE INVENTION

In the manufacturing of new energy batteries, the aluminum shell battery is easy to heat and expand in the formation process. Therefore, it's necessary to place the aluminum shell battery in a constrained tray to apply constraint on the battery by manual press for example, so as to maintain the shape of the battery and limit the expansion of the battery shell, thereby avoiding the expansion and deformation of the battery cell. However, the efficiency is low, which is not applicable to the production lines.

When it is necessary to remove the battery installed in the constrained tray, the constraint on the battery is usually released manually by the operator, leading to a complex operation which is time-consuming and laborious, and causing the increased production cost rise and the low production efficiency.

Therefore, there is an urgent need for a battery constrained device, battery unconstrained device and a battery constrained and unconstrained device to overcome the above defects.

### SUMMARY OF THE INVENTION

A first objective of the present application is to provide a battery constrained device for applying constraints on batteries in a constrained tray.

A second objective of the present application is to provide a battery unconstrained device for releasing constraints on batteries in a constrained tray.

A third objective of the present application is to provide a battery constrained and unconstrained device for applying and releasing constraints on batteries in a constrained tray.

To achieve the above objectives, the present application provides a battery constrained device adapted for applying constraints on batteries in a constrained tray. The battery constrained device includes a first base on which a constrained tray is assembled; a pushing mechanism, assembled on the first base and configured to selectively push a constrained plate in the constrained tray to clamp the batteries in the constrained tray; and a first screw rotation mechanism, mated with the pushing mechanism, assembled on the first base, and selectively connected with a screw in the constrained tray to drive the screw to rotate, so that the first screw rotation mechanism applies constraints on the batteries in the constrained tray under a cooperation of the pushing mechanism.

As a preferred embodiment, the first screw rotation mechanism includes a first screw connecting member mated with the screw; a first screw driver for driving the first screw connecting member to rotate, and the first screw connecting member being assembled on a rotating output shaft of the first screw driver; and a first linear driver for driving the first screw connecting member close to or away from the constrained tray, wherein the first linear driver is assembled on the first base, the first screw driver is assembled on an output end of the first linear driver; in a process of the first linear driver driving the first screw driver and the first screw connecting member close to the screw of the constrained tray, the first screw driver drives the first screw connecting member to rotate so that the first screw connecting member engages with the screw.

As a preferred embodiment, the first screw rotation mechanism further includes a first elastic connecting member located between a rotating output end of the first screw driver and the first screw connecting member, and the first screw connecting member is elastically connected to the first screw driver by the first elastic connecting member.

As a preferred embodiment, the first elastic connecting member is a rectangular spring.

As a preferred embodiment, the pushing mechanism includes a push rod frame mated with the constrained tray; a first displacement lead screw fixed with the push rod frame; a first rotating nut assembled with the first displacement lead screw and rotationally assembled with the first base; and a first nut driver assembled on the first base, wherein a rotating output shaft of the first nut driver is connected to the first rotating nut, thereby driving the first rotating nut to rotate, causing the first displacement lead screw to make a linear displacement, and accordingly driving the push rod frame to slide and push the constrained plate.

As a preferred embodiment, the first screw rotation mechanism further includes a first transmission gear group located between the first rotating nut and the rotating output shaft of the first nut driver, and the first nut driver is connected with the first rotating nut through the first transmission gear group.

To achieve the above objectives, the present application provides a battery unconstrained device, adapted for releasing constraints on batteries in a constrained tray. The battery unconstrained device includes a second base on which a constrained tray is assembled; a release mechanism, assembled on the second base and configured to selectively pull a constrained plate in the constrained tray to release constraints on the batteries in the constrained tray; and a second screw rotation mechanism, mated with the release mechanism, assembled on the second base, and selectively connected with a screw in the constrained tray to drive the screw to rotate, so that the second screw rotation mechanism release constraints on the batteries in the constrained tray under a cooperation of the release mechanism.

As a preferred embodiment, the second screw rotation mechanism includes a second screw connecting member mated with the screw; a second screw driver for driving the second screw connecting member to rotate, and the first screw connecting member being assembled on a rotating output shaft of the second screw driver; and a second linear driver for driving the second screw connecting member close to or away from the constrained tray, wherein the second linear driver is assembled on the second base, the second screw driver is assembled on an output end of the second linear driver; in a process of the second linear driver driving the second screw driver and the second screw connecting member close to the screw of the constrained tray, the second screw driver drives the second screw connecting member to rotate so that the second screw connecting member engages with the screw.

As a preferred embodiment, the second screw rotation mechanism further includes a second elastic connecting member located between a rotating output end of the second screw driver and the second screw connecting member, and the second screw connecting member is elastically connected to the second screw driver by the second elastic connecting member.

As a preferred embodiment, the second elastic connecting member is a rectangular spring.

As a preferred embodiment, the release mechanism includes a pull rod frame mated with the constrained tray; a second displacement lead screw fixed with the pull rod frame; a second rotating nut assembled with the second displacement lead screw and rotationally assembled with the second base; and a second nut driver assembled on the second base, wherein a rotating output shaft of the second nut driver is connected to the second rotating nut, thereby driving the second rotating nut to rotate, causing the second displacement lead screw to make a linear displacement, and accordingly driving the pull rod frame to slide and clamp the constrained plate and then pull back the constrained plate.

As a preferred embodiment, the second screw rotation mechanism further includes a second transmission gear group located between the second rotating nut and the rotating output shaft of the second nut driver, and the second nut driver is connected with the second rotating nut through the second transmission gear group.

To achieve the above objectives, the present application provides a battery constrained and unconstrained device including the mentioned battery constrained device, the mentioned battery unconstrained device; and a frame, on which the first base and the second base are respectively assembled.

As a preferred embodiment, the device further includes a first conveying and lifting device, corresponding to the battery constrained device, wherein the first conveying and lifting device is assembled on the frame and located below the first base, and configured to convey and lift a constrained tray with batteries and in a unconstrained state to the first base; and a second conveying and lifting device, corresponding to the battery unconstrained device, wherein the second conveying and lifting device is assembled on the frame and located below the second base, and configured to convey and lift a constrained tray with batteries and in a constrained state to the second base.

As a preferred embodiment, the first conveying and lifting device and the second conveying and lifting device respectively includes a tray blocking mechanism, a roller chain transmission mechanism and a tray lifting mechanism assembled on the frame, and the roller chain transmission mechanism is located below the first base or the second base, the tray blocking mechanism is located next to the roller chain transmission mechanism and aligned with the first base or the second base, the roller chain transmission mechanism is configured to convey the constrained tray with batteries to the tray blocking mechanism, and the tray lifting mechanism is configured to lift the constrained tray located at the tray blocking mechanism to first base or the second base; the tray lifting mechanism is provided with universal balls by means of which the constrained tray in a rotatable state is carried by the tray lifting mechanism.

In comparison with the prior art, firstly, the battery constrained device of the present application includes a first base for the constrained tray, a pushing mechanism assembled on the first base and a first screw rotation mechanism mated with the pushing mechanism. The pushing mechanism is configured to selectively push a constrained plate in the constrained tray to clamp the batteries in the constrained tray. The first screw rotation mechanism is assembled on the first base and selectively connected with a screw in the constrained tray to drive the screw to rotate, so that the first screw rotation mechanism applies constraints on the batteries in the constrained tray under a cooperation of the pushing mechanism. In such a configuration, the battery constrained device according to the present application may automatically apply constraints on the batteries.

Secondly, the battery unconstrained device of the present application includes a second base for the constrained tray, a release mechanism assembled on the second base, and a second screw rotation mechanism coordinated with the release mechanism. The release mechanism can selectively pull the constrained plate 1a in the constrained tray to release constraints on the batteries in the constrained tray. The second screw rotation mechanism is assembled in the second base and selectively connected with the screw in the constrained tray to drive the screw to rotate, so that the second screw rotation mechanism release constraints on the batteries in the constrained tray under a cooperation of the release mechanism. In such a configuration, the battery unconstrained device according to the present application may automatically release constraints on the batteries.

In addition, the present application provides a battery constrained and unconstrained device, including the aforementioned battery constrained device, the aforementioned battery unconstrained device and a frame, and the first base and the second base are respectively assembled on the frame. Such a device according to the present application may not only automatically apply constraints on the batteries, but also automatically release the constraints on the batteries.

### BRIEF DESCRIPTION OF THE DRAWINGS

In order to more clearly explain the technical solution of the embodiments of the present application or the prior art, the following is a brief introduction to the drawings required in the description of the embodiments or the prior art. It is obvious that the drawings in the description below are some embodiments of the present application. Other drawings can also be obtained from these drawings.

The accompanying drawings facilitate an understanding of the various embodiments of this invention. In such drawings:
FIG. 1 is a perspective view of a battery constrained and unconstrained device according to one embodiment of the present application;
FIG. 2 is a perspective view of a battery constrained device in FIG. 1;
FIG. 3 is a perspective view of a battery unconstrained device in FIG. 1;
FIG. 4 is an exploded perspective view of the battery constrained device of FIG. 2;
FIG. 5 is a perspective view of the first screw rotation mechanism in the battery constrained device shown in FIG. 2; and
FIG. 6 is a perspective view of the first conveying and lifting device in the battery unconstrained device shown in FIG. 1.

**Reference numbers:**

| | | | |
|---|---|---|---|
| 1, | Constrained tray; | 125a, | First driving wheel; |
| 1a, | Constrained plate; | 125b, | First driven wheel; |
| 1b, | Screw; | 126, | First pressure sensor; |
| 2, | Battery; | 13, | First screw rotation |
| 100, | Battery constrained and | | mechanism; |
| | unconstrained device; | 131, | First screw connecting |
| 30a, | First conveying and lifting | | member; |
| | device; | 132, | First screw driver; |
| 30b, | Second conveying and | 133, | First elastic connecting |
| | lifting device; | | member; |
| 31, | Tray blocking mechanism; | 134, | First linear driver; |
| 32, | Roller chain transmission | 135, | First fixed ring; |
| | mechanism; | 136, | Second fixed ring; |
| 33, | Tray lifting mechanism; | 20, | Battery unconstrained device; |
| 33a, | Universal ball; | 21, | Second base; |
| 40, | Frame; | 22, | Release mechanism; |
| 10, | Battery constrained device; | 221, | Pull rod frame; |
| 11, | First base; | 222, | Second displacement lead |
| 12, | Pushing mechanism; | | screw; |
| 121, | Push rod frame; | 223, | Second rotating nut; |
| 122, | First displacement lead | 224, | Second nut driver; |
| | screw; | 225, | Second transmission gear |
| 123, | First rotating nut; | | group; |
| 124, | First nut driver; | 225a, | Second driving wheel; |
| 125, | First transmission gear group; | 225b, | Second driven wheel; |
| 23, | Second screw rotation | 232, | Second screw driver; |
| | mechanism; | 233, | Second elastic connecting |
| 231, | Second screw connecting | | member; |
| | member; | 234, | Second linear driver. |

### DETAILED DESCRIPTION OF ILLUSTRATED EMBODIMENTS

In the description of the embodiments of the present application, it is to be understood that the terms "vertical", "horizontal", "up", "down", "front", "back", "left", "right", "top", "bottom", "inside", "outside", etc. indicate a position relationship based on the position relationship shown in the attached drawings, which is only for the purpose of facilitating the description and simplifying the description of the present application, but not for indicating or implying that the referred device or element must have such a particular orientation, or a construction and operation in such a particular orientation, and therefore shall not be construed as a limitation of the present application. In addition, the features defined as "first" and "second" may explicitly or implicitly include one or more of the features, which are only used to distinguish and describe the features without any order.

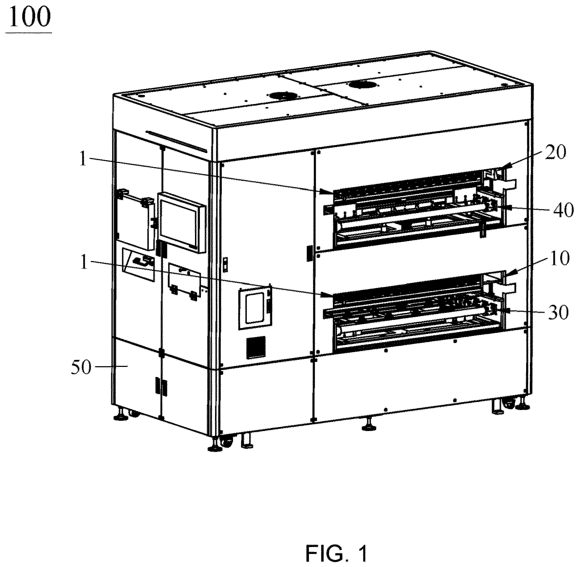

Referring to FIG. 1, a battery constrained and unconstrained device 100 according to one embodiment of the present application includes a battery constrained device 10, a battery unconstrained device 20, a first conveying and lifting device 30a, a second conveying and lifting device 30b, and a frame 40. The battery constrained device 10, the battery unconstrained device 20, the first conveying and lifting device 30a, and the second conveying and lifting device 30b are respectively assembled on the frame 40. The first conveying and lifting device 30a is aligned with the battery constrained device 10 and located under the first base 11, so that the constrained tray 1 with batteries and in a unconstrained state may be lifted to the first base 11 by the first conveying and lifting device 30a, and then be constrained by the battery constrained device 10. The second conveying and lifting device 30b is aligned with the battery unconstrained device 20 and located under the second base 21, so that the constrained tray 1 with batteries conveyed by the second conveying and lifting device 30b may be unconstrained by the battery unconstrained device 20.

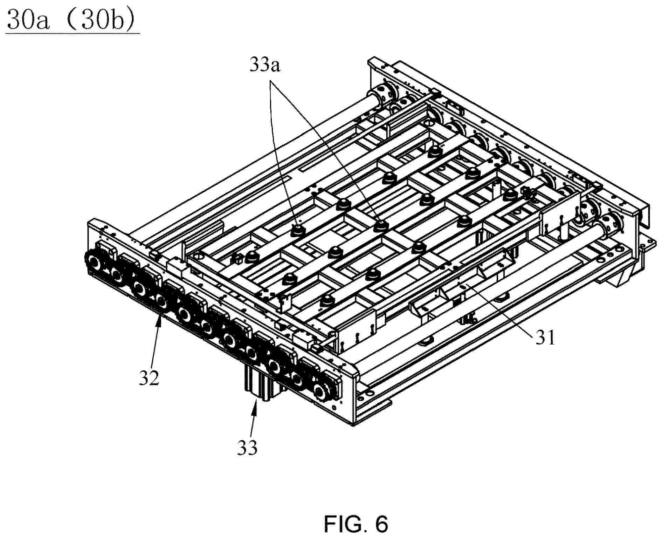

More specifically, referring to FIG. 6, the first conveying and lifting device 30a includes a tray supporting mechanism 31, a roller chain transmission mechanism 32 and a tray lifting mechanism 33 which are mounted on the frame 40. The roller chain transmission mechanism 32 is located below the corresponding first base 11, and the tray supporting mechanism 31 is located next to the roller chain transmission mechanism 32 and aligned with the first base 11. In such a configuration, it's convenient that, the constrained tray 1 with batteries may be conveyed to the tray supporting mechanism 31 by the roller chain transmission mechanism 32, and then lifted to the first base 11 by the roller chain transmission mechanism 32. Preferably, the tray lifting mechanism 33 is provided with universal balls 33a, by means of which the constrained tray 1 with batteries may be carried by the tray lifting mechanism 33, in a floating state above the tray lifting mechanism 33, thereby facilitating the battery constrained device 10 to constrain the batteries on the constrained tray 1.

It should be noted that, as an example, the second conveying and lifting device 30b and the first conveying and lifting device 30a have the same structure, that is, FIG. 6 is also shown as the second conveying and lifting device 30b.

That is to say, as shown in FIG. 6, the second conveying and lifting device 30b includes a tray supporting mechanism 31, a roller chain transmission mechanism 32 and a tray lifting mechanism 33 which are mounted on the frame 40. The roller chain transmission mechanism 32 is located below the corresponding second base 21, and the tray supporting mechanism 31 is located next to the roller chain transmission mechanism 32 and aligned with second base 21. In such a configuration, it's convenient that, the constrained tray 1 with batteries may be conveyed to the tray supporting mechanism 31 by the roller chain transmission mechanism 32, and then lifted to the second base 21 by the roller chain transmission mechanism 32. Preferably, the tray lifting mechanism 33 is provided with universal balls 33a, by means of which the constrained tray 1 with batteries may be carried by the tray lifting mechanism 33, in a rotatable and floating state above the tray lifting mechanism 33, thereby facilitating the battery constrained device 10 to constrain the batteries on the constrained tray 1.

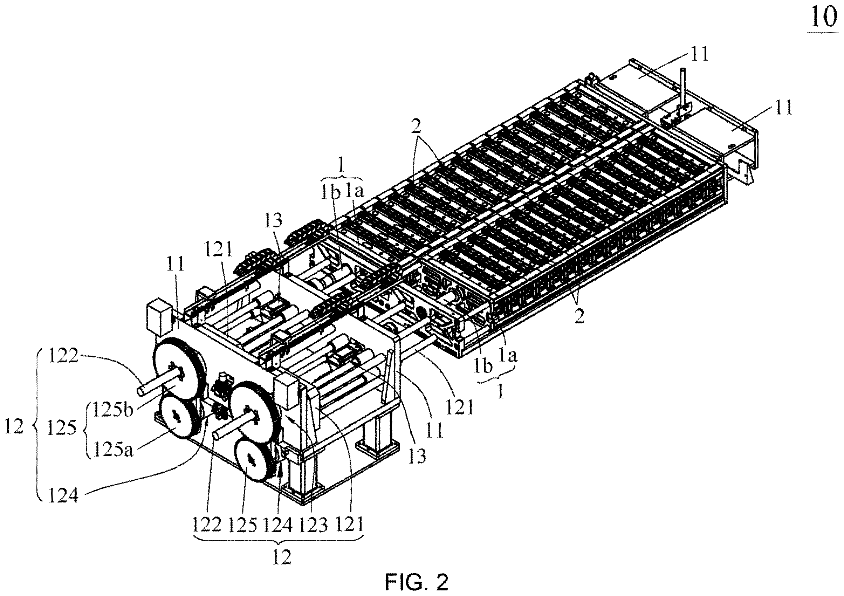

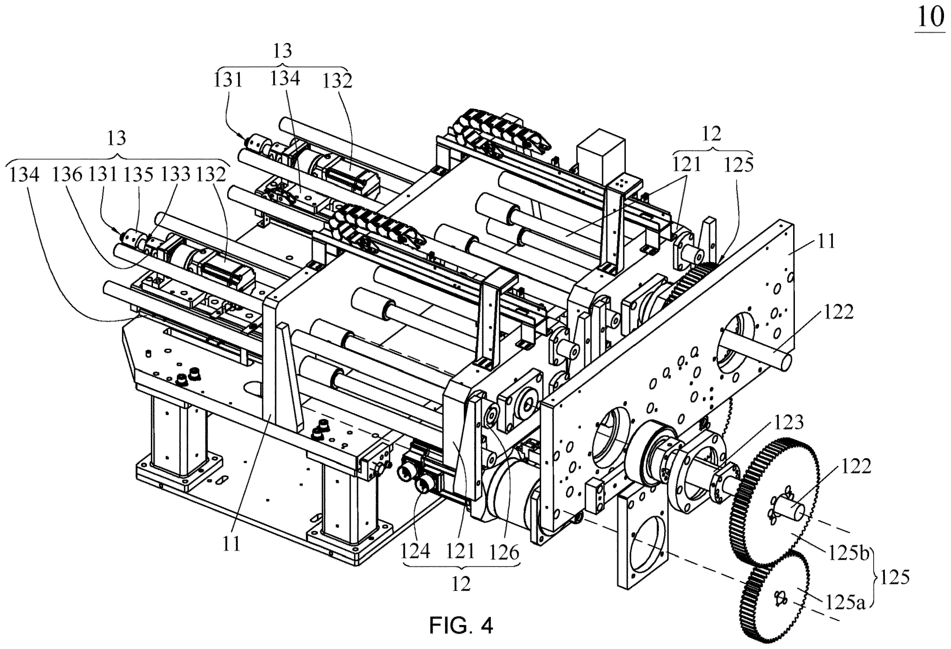

Referring to FIG. 2 and FIG. 4, the battery constrained device 10 includes a first base 11, a pushing mechanism 12 and a first screw rotation mechanism 13. The first base 11 is used to support the constrained tray 1, that is, when the tray lifting mechanism 33 lifts the constrained tray 1 upward to the first base 11, one end of the constrained tray 1 is assembled and fixed with the first base 11, so that the battery constrained device 10 located at the other end of the constrained tray 1 can perform constrains on the batteries in the constrained tray 1. The pushing mechanism 12 is assembled on the first base 11, so that the pushing mechanism 12 can selectively push the constrained plate 1a in the constrained tray 1, thus clamping the batteries located in the constrained tray 1. The first screw rotation mechanism 13 is matched with the pushing mechanism 12, and the first screw rotation mechanism 13 is assembled on the first base 11, so that the first screw rotation mechanism 13 can be selectively connected with the screw 1b in the constrained tray 1, to drive the screw 1b to rotate, as a result, the first screw rotation mechanism 13 applies constraints on the batteries located in the constrained tray 1 with the cooperation of the pushing mechanism 12.

As shown in FIGs. 4-5, the first screw rotation mechanism 13 includes a first screw connecting member 131, a first screw driver 132 and a first linear driver 134. Specifically, the first screw connecting member 131 is assembled on the rotating output shaft of the first screw driver 132, so that the first screw driver 132 drives the first screw connecting member 131 to rotate. The first linear driver 134 is assembled on the first base 11, and the first screw driver 132 is assembled on the output end of the first linear driver 134, so that the first linear driver 134 drives the first screw connecting member 131 to move close to or away from the constrained tray 1. Moreover, the first screw connecting member 131 is configured to engage with the screw 1b. As a result, in the process of the first linear driver 134 driving the first screw driver 132 and the first screw connecting member 131 to move close to the screw 1b of the constrained tray 1, the first screw driver 132 drives the first screw connecting member 131 to rotate, so that the first screw connecting member 131 moves close to the screw 1b and then engages with the screw 1b.

As shown in FIGs. 4-5, the first screw rotation mechanism 13 further includes a first elastic connecting member 133 located between the rotating output end of the first screw driver 132 and the first screw connecting member 131, so that the first screw connecting member 131 is elastically connected to the first screw driver 132 by the first elastic connecting member 133. As a result, in the process of the first screw connecting member 131 moving close to the screw 1b, it's easy to center and align between the first screw connecting member 131 and the the screw 1b due to the elasticity of the first elastic connecting member 133, achieving a rapid alignment.

As shown in FIGs. 4-5, the first elastic connecting member 133 is a rectangular spring to further ensure its aligning function and rapid alignment, which is not limited however. In particular, the first screw rotating mechanism 13 further includes a first fixed ring 135 located between the first elastic connecting member 133 and the first screw connecting member 131 and a second fixed ring 136 located between the first elastic connecting member 133 and the rotating output shaft of the first screw driver 132, which ensures reliable connections between the first elastic connecting member 133 and the first screw connecting member 131, and between the first elastic connecting member 133 and the rotating output shaft of the first screw driver 132.

As shown in FIGs. 2 and 4, the pushing mechanism 12 includes a push rod frame 121, a first displacement lead screw 122, a first rotating nut 123 and a nut driver 124. Specifically, the push rod frame 121 is matched with the constrained tray 1, so that the push rod frame 121 can push the constrained plate 1a of the constrained tray 1 when sliding close to the constrained tray 1. The first displacement lead screw 122 is fixedly connected with the push rod frame 121, the first rotating nut 123 is mated with the first displacement lead screw 122 and rotationally assembled on the first base 11, so that the first rotating nut 123 can be rotated, causing the first displacement lead screw 122 to make a linear displacement, thereby driving the push rod frame 121 to slide close to or away from the constrained plate 1a. The first nut driver 124 is assembled on the first base 11, and the first rotating nut 123 is assembled on the rotating output shaft of the first nut driver 124, so that the first nut driver 124 can drive the first rotating nut 123 to rotate, causing the first displacement lead screw 122 to make a linear displacement, thereby driving the push rod frame 121 to slide close to the constrained plate 1a.

As shown in FIGs. 2 and 4, the first screw rotation mechanism 13 further includes a first transmission gear group 125 located between the first rotating nut 123 and the rotating output shaft of the first nut driver 124, so that the first nut driver 124 is connected to the first rotating nut 123 by the first transmission gear group 125, which facilitates the adjustment on the position of the first nut driver 124 to reduce the lateral space occupied by the battery constrained device 10. Specifically, the first transmission gear group 125 includes a first driving wheel 125a and a first driven wheel 125b meshing with the first driving wheel 125a. The first nut driver 124 is located below the first rotating nut 123, the rotating output shaft of the first nut driver 124 is connected with the first driving wheel 125a, and the first driven wheel 125b is assembled with the first rotating nut 123. By this token, the mechanism of the battery constrained device 10 is compact, which further reduce the lateral space occupied by the battery constrained device 10.

As shown in FIG. 4, a first pressure sensor 126 is further arranged between the first base 11 and the pushing mechanism 12 to facilitate the monitor and the adjustment of the pressure applied by the pushing mechanism 12.

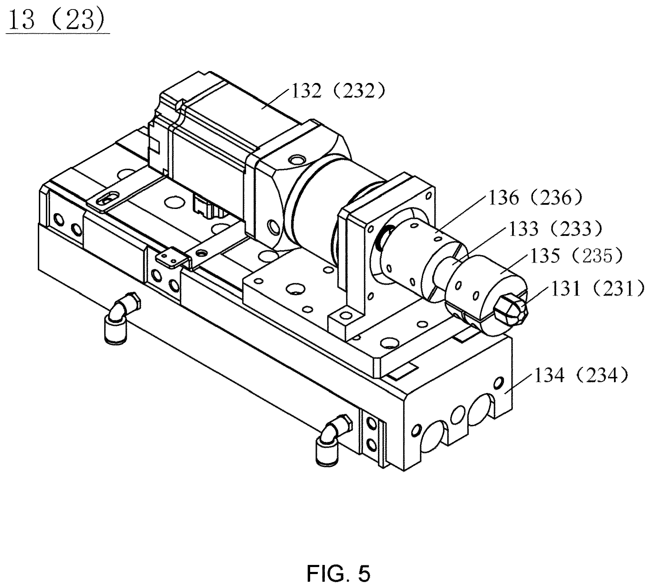

It should be noted that, as an example, the differences between the battery unconstrained device 20 and the battery constrained device 10 include the pulling mechanism 22 and the pushing mechanism 12, namely the difference between the push rod frame 221 and the push rod frame 121. That is, the structural relationship of the second base 21 and the second screw rotation mechanism 23 in the battery unconstrained device 20 corresponds to that of the first base 11 and the first screw rotation mechanism 13 in the battery constrained device 10 correspond to the same; the structural relationship of the second displacement lead screw 222, the second rotating nut 223, the second nut driver 224 and the second transmission gear group 225 in the pulling mechanism 22 correspond to that of the first displacement lead screw 122, the first rotating nut 123, the first nut driver 124 and the first transmission gear group 125 in the pushing mechanism 12. That is to say, FIG. 5 is also shown as the second screw rotation mechanism 23 (refer to the reference numbers in the brackets).

Therefore, in combination with FIGs. 2-4, the battery unconstrained device 20 includes a second base 21, a release mechanism 22 and a second screw rotation mechanism 23. The second base 21 is configured to assemble the constrained tray 1 thereon, that is, when the tray lifting mechanism 33 lifts the constrained tray 1 upward to the second base 21, one end of the constrained tray 1 is assembled and fixed with the second base 21, thus ensuring that the battery unconstrained device 20 located at the other end of the constrained tray 1 can release constraints on the batteries in the constrained tray 1. The release mechanism 22 is assembled with the second base 21 so that the release mechanism 22 can selectively pull the constrained plate 1a in the constrained tray 1 to release the constraints on the batteries located in the constrained tray 1. The second screw rotation mechanism 23 is mated with the release mechanism 22, and the second screw rotation mechanism 23 is assembled on the second base 21, so that the second screw rotation mechanism 23 can be selectively connected with the screw 1b in the constrained tray 1, to rotate the screw 1b. In such a way, the second screw rotation mechanism 23 can release the constraint on the batteries in the constrained tray 1 with the cooperation of the release mechanism 22.

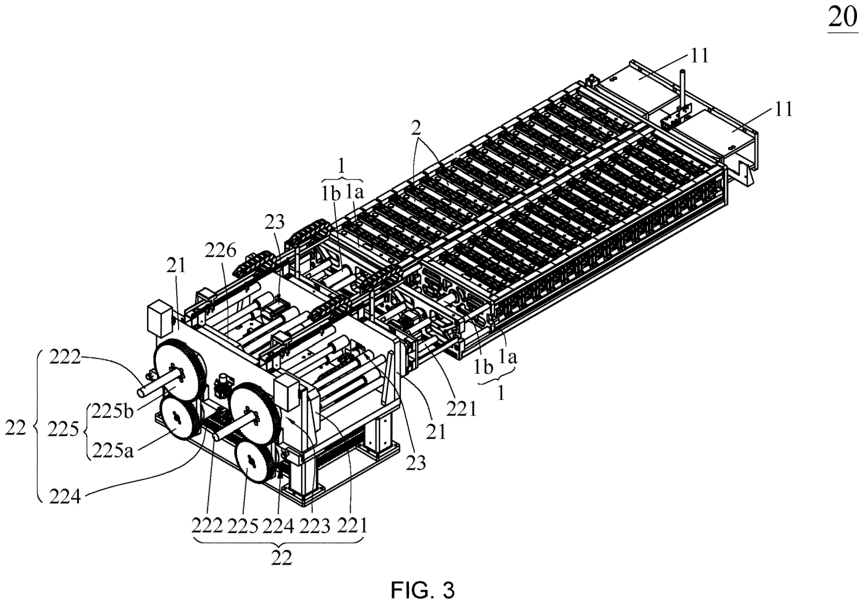

In combination with FIGs. 3-5, the second screw rotation mechanism 23 includes a second screw connecting member 231, a second screw driver 232, and a second linear driver 234. Specifically, the second linear driver 234 is configured for driving the second screw connecting member 231 close to or away from the constrained tray 1; the second screw connecting member 231 is assembled on the rotating output end of the second screw driver 232, so that the second screw driver 232 drives the second screw connecting member 231 to rotate; and the second linear driver 234 is assembled on the second base 21, and the second screw driver 232 is assembled on the output end of the second linear driver 234, so that the second linear driver 234 drives the second screw clamp member 231 close to or away from the constrained tray 1. Moreover, the second screw clamp member 231 is configured to engage with the screw 1b. In the process of the second linear driver 234 driving the second screw driver 232 and the second screw connecting member 231 close to the screw 1b of the constrained tray 1, the second screw driver 232 drives the second screw connecting member 231 to rotate so that the second screw connecting member 231 engages with the screw by rotating and moving close to one another.

As shown in FIGs. 3-5, the second screw rotation mechanism 23 further includes a second elastic connecting member 233 located between a rotating output end of the second screw driver 232 and the second screw connecting member 231, so that the second screw connecting member 233 is elastically connected to the second screw driver 232 by the second elastic connecting member 233. As a result, in the process of the second screw connecting member 231 moving close to the screw 1b, it's easy to center and align therebetween, thereby achieving a rapid alignment. In particular, the second elastic connecting member 233 is a rectangular spring to further ensure the centering function and the rapid alignment.

Referring to FIGs. 2-4, the release mechanism 22 includes a pull rod frame 221, a second displacement lead screw 222, a second rotating nut 223 and a second nut driver 224. Specifically, the pull rod frame 221 is cooperated with the constrained tray 1, which is configured to clamp the constrained plate 1a when moving close to the constrained tray 1. The second displacement lead screw 222 is fixed with the pull rod frame 221, and the second rotating nut 223 is assembled with the second displacement lead screw 222 and rotationally assembled with the second base 21, so that the second rotating nut 223 can be driven to rotate, causing the second displacement lead screw 222 to make a linear displacement, and accordingly driving the pull rod frame 221 to move close to or away from the constrained plate 1a. The second nut driver 224 is assembled on the second base 21, and the rotating output shaft of the second nut driver 224 is connected to the second rotating nut 223, in such a way, the second nut driver 224 may selectively drive the second rotating nut 223 to rotate, causing the second displacement lead screw 222 to make a linear displacement, and accordingly driving the pull rod frame 221 to slide and clamp the constrained plate 1a and then pull back the constrained plate 1a.

Referring to FIGs. 2-4, the second screw rotation mechanism 23 further includes a second transmission gear group 225 located between the second rotating nut 223 and the rotating output shaft of the second nut driver 224, so that the second nut driver 224 is connected to the second rotating nut 223 by the second transmission gear group 225, which facilitates the adjustment on the position of the second nut driver 224 to reduce the lateral space occupied by the battery unconstrained device 20. Specifically, the second transmission gear group 225 includes a second driving wheel 225a and a second driven wheel 225b meshing with the second driving wheel 225a. The second nut driver 224 is located below the second rotating nut 223, the rotating output shaft of the second nut driver 224 is connected with the second driving wheel 225a, and the second driven wheel 225b is assembled with the second rotating nut 223. By this token, the mechanism of the battery unconstrained device 20 is compact, which further reduces the lateral space occupied by the battery unconstrained device 20.

In comparison with the prior art, firstly, the battery constrained device 10 of the present application includes a first base 11 for the constrained tray 1, a pushing mechanism 12 assembled on the first base 11 and a first screw rotation mechanism 13 mated with the pushing mechanism 12. The pushing mechanism 12 is configured to selectively push a constrained plate in the constrained tray 1 to clamp the batteries in the constrained tray 1. The first screw rotation mechanism 13 is assembled on the first base 11 and selectively connected with a screw 1b in the constrained tray 1 to drive the screw 1b to rotate, so that the first screw rotation mechanism 13 applies constraints on the batteries in the constrained tray 1 under a cooperation of the pushing mechanism 12. In such a configuration, the battery constrained device 10 according to the present application may automatically apply constraints on the batteries.

Secondly, the battery unconstrained device 20 of the present application includes a second base 21 for the constrained tray 1, a release mechanism 22 assembled on the second base 21, and a second screw rotation mechanism 23 coordinated with the release mechanism 22. The release mechanism 22 can selectively pull the constrained plate 1a in the constrained tray 1 to release constraints on the batteries in the constrained tray 1. The second screw rotation mechanism 23 is assembled in the second base 21 and selectively connected with the screw 1b in the constrained tray 1 to drive the screw 1b to rotate, so that the second screw rotation mechanism 23 release constraints on the batteries in the constrained tray 1 under a cooperation of the release mechanism 22. In such a configuration, the battery unconstrained device 20 according to the present application may automatically release constraints on the batteries.

In addition, the present application provides a battery constrained and unconstrained device 100, including the aforementioned battery constrained device 10, the aforementioned battery unconstrained device 20 and a frame 40, and the first base 11 and the second base 21 are respectively assembled on the frame 40. Such a device according to the present application may not only automatically apply constraints on the batteries, but also automatically release the constraints on the batteries.

## Claims

1. A battery constrained device, adapted for applying constraints on batteries in a constrained tray, and the battery constrained device comprising:
a first base on which a constrained tray is assembled;
a pushing mechanism, assembled on the first base and configured to selectively push a constrained plate in the constrained tray to clamp the batteries in the constrained tray; and
a first screw rotation mechanism, mated with the pushing mechanism, assembled on the first base, and selectively connected with a screw in the constrained tray to drive the screw to rotate, so that the first screw rotation mechanism applies constraints on the batteries in the constrained tray under a cooperation of the pushing mechanism.

2. The battery constrained device according to claim 1, wherein the first screw rotation mechanism comprises:
a first screw connecting member mated with the screw;
a first screw driver for driving the first screw connecting member to rotate, and the first screw connecting member being assembled on a rotating output shaft of the first screw driver; and
a first linear driver for driving the first screw connecting member close to or away from the constrained tray, wherein the first linear driver is assembled on the first base, the first screw driver is assembled on an output end of the first linear driver; in a process of the first linear driver driving the first screw driver and the first screw connecting member close to the screw of the constrained tray, the first screw driver drives the first screw connecting member to rotate so that the first screw connecting member engages with the screw.

3. The battery constrained device according to claim 2, wherein the first screw rotation mechanism further comprises a first elastic connecting member located between a rotating output end of the first screw driver and the first screw connecting member, and the first screw connecting member is elastically connected to the first screw driver by the first elastic connecting member.

4. The battery constrained device according to claim 3, wherein the first elastic connecting member is a rectangular spring.

5. The battery constrained device according to claim 1, wherein the pushing mechanism comprises:
a push rod frame mated with the constrained tray;
a first displacement lead screw fixed with the push rod frame;
a first rotating nut assembled with the first displacement lead screw and rotationally assembled with the first base; and
a first nut driver assembled on the first base, wherein a rotating output shaft of the first nut driver is connected to the first rotating nut, thereby driving the first rotating nut to rotate, causing the first displacement lead screw to make a linear displacement, and accordingly driving the push rod frame to slide and push the constrained plate.

6. The battery constrained device according to claim 5, wherein the first screw rotation mechanism further comprises a first transmission gear group located between the first rotating nut and the rotating output shaft of the first nut driver, and the first nut driver is connected with the first rotating nut through the first transmission gear group.

7. A battery unconstrained device, adapted for releasing constraints on batteries in a constrained tray, and the battery unconstrained device comprising:
a second base on which a constrained tray is assembled;
a release mechanism, assembled on the second base and configured to selectively pull a constrained plate in the constrained tray to release constraints on the batteries in the constrained tray; and
a second screw rotation mechanism, mated with the release mechanism, assembled on the second base, and selectively connected with a screw in the constrained tray to drive the screw to rotate, so that the second screw rotation mechanism release constraints on the batteries in the constrained tray under a cooperation of the release mechanism.

8. The battery unconstrained device according to claim 7, wherein the second screw rotation mechanism comprises:
a second screw connecting member mated with the screw;
a second screw driver for driving the second screw connecting member to rotate, and the first screw connecting member being assembled on a rotating output shaft of the second screw driver; and
a second linear driver for driving the second screw connecting member close to or away from the constrained tray, wherein the second linear driver is assembled on the second base, the second screw driver is assembled on an output end of the second linear driver; in a process of the second linear driver driving the second screw driver and the second screw connecting member close to the screw of the constrained tray, the second screw driver drives the second screw connecting member to rotate so that the second screw connecting member engages with the screw.

9. The battery unconstrained device according to claim 8, wherein the second screw rotation mechanism further comprises a second elastic connecting member located between a rotating output end of the second screw driver and the second screw connecting member, and the second screw connecting member is elastically connected to the second screw driver by the second elastic connecting member.

10. The battery unconstrained device according to claim 9, wherein the second elastic connecting member is a rectangular spring.

11. The battery unconstrained device according to claim 7, wherein the release mechanism comprises:
a pull rod frame mated with the constrained tray;
a second displacement lead screw fixed with the pull rod frame;
a second rotating nut assembled with the second displacement lead screw and rotationally assembled with the second base; and
a second nut driver assembled on the second base, wherein a rotating output shaft of the second nut driver is connected to the second rotating nut, thereby driving the second rotating nut to rotate, causing the second displacement lead screw to make a linear displacement, and accordingly driving the pull rod frame to slide and clamp the constrained plate and then pull back the constrained plate.

12. The battery unconstrained device according to claim 11, wherein the second screw rotation mechanism further comprises a second transmission gear group located between the second rotating nut and the rotating output shaft of the second nut driver, and the second nut driver is connected with the second rotating nut through the second transmission gear group.

13. A battery constrained and unconstrained device, comprising:
the battery constrained device according to any of claims 1-6;
the battery unconstrained device according to any of claims 7-12; and
a frame, on which the first base and the second base are respectively assembled.

14. The battery constrained and unconstrained device according to claim 13, further comprising:
a first conveying and lifting device, corresponding to the battery constrained device, wherein the first conveying and lifting device is assembled on the frame and located below the first base, and configured to convey and lift a constrained tray with batteries and in a unconstrained state to the first base; and
a second conveying and lifting device, corresponding to the battery unconstrained device, wherein the second conveying and lifting device is assembled on the frame and located below the second base, and configured to convey and lift a constrained tray with batteries and in a constrained state to the second base.

15. The battery constrained and unconstrained device according to claim 14, wherein the first conveying and lifting device and the second conveying and lifting device respectively comprises a tray blocking mechanism, a roller chain transmission mechanism and a tray lifting mechanism assembled on the frame, and the roller chain transmission mechanism is located below the first base or the second base, the tray blocking mechanism is located next to the roller chain transmission mechanism and aligned with the first base or the second base, the roller chain transmission mechanism is configured to convey the constrained tray with batteries to the tray blocking mechanism, and the tray lifting mechanism is configured to lift the constrained tray located at the tray blocking mechanism to first base or the second base; and the tray lifting mechanism is provided with universal balls by means of which the constrained tray in a rotatable state is carried by the tray lifting mechanism.
